# EUROPEAN PATENT SPECIFICATION

(11) **EP 0 773 080 B1**
(45) Date of publication and mention of the grant of the patent: **05.07.2000**
(21) Application number: 96307919.9
(22) Date of filing: 31.10.1996
(51) Int. Cl.: B22F 7/06, C22C 26/00

(54) **Method for producing uniformly high quality abrasive compacts**
Verfahren zur Herstellung von abrasiven Körper mit gleichmässiger hoher Qualität
Procédé de préparation de corps abrasifs à qualité élevée uniforme

(30) Priority: 13.11.1995 US 555672
(43) Date of publication of application: 14.05.1997
(73) Proprietor: GENERAL ELECTRIC COMPANY, Schenectady, NY 12345 (US)
(72) Inventor: Cerutti, David Bruce, Worthington, Ohio 43085 (US); Adkins, James A., Columbus, Ohio 43229 (US)
(74) Representative: Goode, Ian Roy

(56) References cited:
- EP-A- 0 046 374
- EP-A- 0 306 353
- GB-A- 2 275 690
- PATENT ABSTRACTS OF JAPAN vol. 015, no. 461 (C-0887), 22 November 1991 & JP 03 197677 A (SUMITOMO ELECTRIC IND LTD), 29 August 1991,
- CHEMICAL ABSTRACTS, vol. 116, no. 10, 9 March 1992 Columbus, Ohio, US; abstract no. 89720, GUBAREVICH, T. M. ET AL: "Trace impurity content of ultrafine diamond" XP002024682 & SVERKHTVERD. MATER. (1991), (5), 30-4 CODEN: SVMAD2;ISSN: 0203-3119, 1991,

## Description

This invention relates to the production of abrasive compacts, and more particularly to the production of high quality compacts having excellent adhesion between abrasive particles.

The use of abrasive compacts as forming and working tools or raw material therefore is well known. Abrasive materials therein include diamond and cubic boron nitride ("CBN"), sometimes collectively designated "abrasive" hereinafter. Particularly useful are compacts of synthetic diamond produced under high pressure, high temperature (hereinafter "HPHT") conditions.

In the production of such compacts, a substrate material comprising a carbide support and a catalyst/solvent material for the abrasive is typically employed. A typical substrate material is predominantly metal carbide, especially tungsten carbide, combined with a ferrous metal such as iron, cobalt or nickel which serves as a catalyst/solvent material in the case of diamond compacts. For cubic boron nitride compacts, catalyst/solvent materials include aluminum and its compounds and alloys.

The substrate and catalyst/solvent material is combined with abrasive particles, the latter being present in major proportion, and the combination is subjected to HPHT conditions. The combination of ferrous metal and catalyst/solvent (identical in the case of diamond) sweeps through the abrasive particles causing them to sinter and bond together, resulting in the formation of a compact having the desired cutting and/or working properties.

A disadvantage encountered in commercial practice of this method of compact production, especially with CBN as the abrasive, is variability in the quality of the compacts obtained. High quality compacts have a securely bonded abrasive layer on the front side. In many poor quality compacts, the abrasive is inadequately bonded an/or cracked, with the result that the compact must be rejected since it will not survive extended usage. Compactquality may be extremely erratic, with the formation of many of excellent quality followed by just as many, or sometimes more, of poor quality rendering them unusable.

Various sources of substrate material have been utilized in compact production. The prior art, as exemplified by U.S. Patents 5,009,673, 5,022,894 and Re 32,380, discloses that the substrate material may comprise tungsten carbide, titanium carbide, tantalum carbide, molybdenum carbide or a mixture thereof. Although tungsten carbide is disclosed as generally being preferred, no operative distinction between these metals is made.

EP 0 306 353-A discloses a WC-Co substrate, without mentioning the content of other elements.

Accordingly, commercially practiced compact fabrication procedures do not distinguish between substrate materials on the basis of the presence or absence of metals other than tungsten.

The present invention is based on the discovery that, contrary to the aforementioned prior art, the presence of certain non-tungsten metals in the substrate material has a serious effect on the quality of the compact produced, particularly when the abrasive is CBN. In particular, the presence of titanium in proportions above 100 ppm cannot be tolerated since higher levels will cause the aforementioned problems necessitating compact rejection. It also appears that the presence of more than threshold levels of tantalum is detrimental.

Accordingly, the invention is a method for producing an abrasive compact which comprises:
analyzing for titanium a substrate material comprising a carbide support material and a ferrous metal, and rejecting any of said substrate material having a titanium content greater than 100 ppm;
subjecting a combination of said substrate material, a catalyst/solvent material and abrasive particles comprising diamond or cubic boron nitride to high pressure, high temperature conditions effective to sweep said ferrous metal through said abrasive particles and bond and sinter any abrasive present.

As previously mentioned, the method of this invention is of particular significance in the production of CBN compacts. It may also be employed, however, for diamond compact fabrication.

The substrate materials employed in the method of the invention comprise, as previously stated, a carbide support and a ferrous metal. Typical ferrous metals, which serve as catalyst/solvent materials for formation of diamond compacts, are iron, cobalt and nickel, with cobalt generally being preferred. The highly preferred carbide support material is tungsten carbide. In general, the carbide support material is present in major amount, typically at least 80% by weight, with the balance being ferrous metal.

In the fabrication of diamond compacts, the ferrous metal also serves as a catalyst/solvent. With CBN, however, aluminum, its compounds such as aluminum nitride, and aluminum alloys of such metals as cobalt, nickel and manganese are typically employed.

The essential feature of the invention is the titanium content of the substrate material, which should in no event be greater than 100 ppm. Therefore, an essential feature of the invention is the analysis of the substrate material for titanium, followed by the rejection of any material having a titanium content greater than 100 ppm. Any material having a tantalum content greater than 100 ppm is also rejected. Analysis for titanium and tantalum may be performed by conventional means by either the compact manufacturer or the raw material supplier.

The reason for the adverse effect of titanium is not known with certainty. It is believed, however, that the titanium may react with the nitrogen in the CBN to form titanium nitride, which forms a layer between the substrate and the CBN and inhibits sweep of the ferrous metal, causing a decrease in bonding between the CBN particles.

Following analysis of the substrate material and rejection of any unsuitable samples thereof, conventional compact-forming operations are performed. These may include, for example, placing layers of substrate material, catalyst/solvent and CBN particles in a suitable container, typically a cylindrical sleeve of a shield metal such as zirconium, titanium, tantalum, tungsten or molybdenum. It should be noted that the employment of titanium or tantalum for this purpose according to the invention is not foreclosed, since the container contacts the compact-forming constituents only on the outside surface and is not blended with said material during the HPHT operations.

In general, the thickness ratio of substrate to abrasive table in the finished compact is in the range of about 1-6:1. In the abrasive table, the proportion of abrasive is at least about 70% and preferably at least about 90% by volume. Catalyst/solvent may be present in the abrasive table in amounts typically on the order of 4-10%.

The combination of substrate and abrasive material is subjected to HPHT conditions in the diamond stable pressure-temperature region, typically a pressure in the range of 40-50 kbar at a temperature in the range of 1000-1300°C, for a period of time sufficient to bond and sinter the grains of abrasive material. Times of 3-120 minutes are typical. During this step, the ferrous metal sweeps through (i.e., infiltrates) the abrasive particles and serves as a bonding aid. Upon cessation of the HPHT conditions, cooling and removal of the container, a compact of uniformly high quality is obtained.

The invention is illustrated by a series of conventional CBN compact-forming runs employing tungsten carbide, cobalt and aluminum nitride. Various tungsten carbide-cobalt blends were employed, having titanium contents from 3 to 3900 ppm. Samples having titanium contents of 3, 4.7 and 5.3 ppm produced uniformly high quality compacts. Samples having titanium contents from 1900 to 3900 ppm produced compacts characterized by cracked diamond surfaces.

## Claims

1. A method for producing an abrasive compact which comprises:
analyzing for titanium a substrate material comprising a carbide support material and a ferrous metal, and rejecting any of said substrate material having a titanium content greater than 100 ppm;
subjecting a combination of said substrate material, a catalyst/solvent material and abrasive particles comprising diamond or cubic boron nitride to high pressure, high temperature conditions effective to sweep said ferrous metal through said abrasive particles and bond and sinter any abrasive present

2. A method according to claim 1 wherein the abrasive particles are diamond.

3. A method according to claim 2 wherein the abrasive particles are synthetic diamond.

4. A method according to claim 1 wherein the abrasive particles are cubic boron nitride and there is also present aluminum or an alloy or compound thereof as a catalyst/solvent material.

5. A method according to claim 4 wherein the support material is tungsten carbide.

6. A method according to claim 4 wherein the ferrous metal is iron, cobalt or nickel.

7. A method according to claim 4 wherein the catalyst/solvent material is aluminum.

8. A method according to claim 4 wherein the catalyst/solvent material is a nickel-aluminum alloy.

9. A method according to claim 4 wherein the catalyst/solvent material is aluminum nitride.

10. A method according to claim 1 wherein the substrate material is also analyzed for tantalum and any of said substrate material having a tantalum content greater than 100 ppm is rejected.

## Patentansprüche

1. Verfahren zum Herstellen eines Schleifpresslings, umfassend das Analysieren eines ein Carbidträger-Material und ein Metall der Eisengruppe umfassendes Substratmaterial auf Titan, und Zurückweisen jeglichen Substratmaterials mit einem Titangehalt von mehr als 100 ppm;
Aussetzen einer Kombination des Substratmaterials, eines Katalysator/Lösungsmittel-Materials und der Diamant oder kubisches Bornitrid umfassenden Schleifteilchen Bedingungen hohen Druckes, hoher Temperatur, die wirksam sind, das Metall der Eisengruppe durch die Schleifteilchen zu befördern und irgendeinen vorhandenen Schleifdiamant zu binden und zu sintern.

2. Verfahren nach Anspruch 1, worin die Schleifteilchen Diamant sind.

3. Verfahren nach Anspruch 2, worin die Schleifteilchen synthetischer Diamant sind.

4. Verfahren nach Anspruch 1, worin die Schleifteilchen kubisches Bornitrid sind und auch Aluminium oder eine Legierung oder Verbindung davon als ein Katalysator/Lösungsmittel-Material vorhanden ist.

5. Verfahren nach Anspruch 4, worin das Trägermaterial Wolframcarbid ist.

6. Verfahren nach Anspruch 4, worin das Metall der Eisengruppe Eisen, Cobalt oder Nickel ist.

7. Verfahren nach Anspruch 4, worin das Katalysator/Lösungsmittel-Material Aluminium ist.

8. Verfahren nach Anspruch 4, worin das Katalysator/Lösungsmittel-Material eine Nickel-Aluminium-Legierung ist.

9. Verfahren nach Anspruch 4, worin das Katalysator/Lösungsmittel-Material Aluminiumnitrid ist.

10. Verfahren nach Anspruch 1, worin das Substratmaterial auch auf Tantal analysiert wird, und jegliches Substratmaterial mit einem Tantalgehalt von mehr als 100 ppm zurückgewiesen wird.

## Revendications

1. Procédé de production de corps compacts abrasifs, lequel procédé comporte :
le fait de déterminer par analyse la teneur en titane d'un matériau substrat, comprenant un matériau de support en carbure et un métal ferreux, et le fait de rejeter tout échantillon de matériau substrat dont la teneur en titane est supérieure à 100 ppm ; et
le fait de mettre une combinaison du matériau substrat, d'un matériau catalyseur/solvant et de particules abrasives, en diamant ou en nitrure de bore cubique, sous des conditions de haute pression et haute température dans lesquelles le métal ferreux est efficacement poussé entre les particules abrasives et lie et fritte tout l'abrasif présent.

2. Procédé conforme à la revendication 1, dans lequel les particules abrasives sont en diamant.

3. Procédé conforme à la revendication 2, dans lequel les particules abrasives sont en diamant synthétique.

4. Procédé conforme à la revendication 1, dans lequel les particules abrasives sont en nitrure de bore cubique, et dans lequel on utilise aussi, en tant que matériau catalyseur/solvant, de l'aluminium, l'un de ses alliages ou l'un de ses composés.

5. Procédé conforme à la revendication 4, dans lequel le matériau de support est du carbure de tungstène.

6. Procédé conforme à la revendication 4, dans lequel le métal ferreux est du fer, du cobalt ou du nickel.

7. Procédé conforme à la revendication 4, dans lequel le matériau catalyseur/solvant est de l'aluminium.

8. Procédé conforme à la revendication 4, dans lequel le matériau catalyseur/solvant est un alliage de nickel et d'aluminium.

9. Procédé conforme à la revendication 4, dans lequel le matériau catalyseur/solvant est du nitrure d'aluminium.

10. Procédé conforme à la revendication 1, dans lequel on détermine aussi par analyse la teneur en tantale du matériau substrat et l'on rejette tout échantillon de matériau substrat dont la teneur en tantale est supérieure à 100 ppm.
